# DEMANDE DE BREVET EUROPEEN

(11) **EP 1 424 237 A1**
(43) Date de publication de la demande: **02.06.2004**
(21) Numéro de dépôt: 03104366.4
(22) Date de dépôt: 25.11.2003
(51) Int. Cl.: B60K 37/06, B60Q 3/02, B60J 7/057

(54) **Plafonnier bifonctionnel, notamment pour véhicule automobile**

(30) Priorité: 26.11.2002 FR 0214815
(71) Demandeur: DAV, 78180 Montigny le Bretonneux (FR)
(72) Inventeur: Pallas, Jean Michel, 74106, Annemasse (FR)
(74) Mandataire: Croonenbroek, Thomas

(57) **Abrégé**

L'invention concerne un plafonnier, notamment pour véhicule automobile, comportant des premiers moyens de commande d'un toit ouvrant et des seconds moyens de commande d'un éclairage. Lesdits premiers moyens de commande (16) comprennent un dispositif d'activation par surface tactile matricielle, ladite surface tactile matricielle présentant une première zone de détection (18, 22) adaptée à recevoir un appui pour commander ledit toit ouvrant. Lesdits seconds moyens de commande, situés éloignés dudit dispositif d'activation, comprennent une seconde zone de détection (34, 36, 38) adaptée à commander ledit éclairage (28, 30, 32) lorsque ladite seconde zone de détection (34, 36, 38) est occupée.

## Description

La présente invention se rapporte à un plafonnier, notamment pour les véhicules automobiles, comportant des premiers moyens de commande d'un toit ouvrant et des seconds moyens de commande d'un éclairage.

On connaît des plafonniers, montés sur la paroi de plafond des véhicules automobiles qui comportent, outre les moyens d'éclairage, les moyens de commande de l'éclairage formés d'interrupteurs mécaniques, par exemple à bascule, et éventuellement, les moyens de commande de l'ouverture du toit ouvrant.

Le toit ouvrant, généralement actionné par un moteur électrique, doit pouvoir être entraîné soit vers une position d'ouverture, soit vers une position de fermeture, ce qui nécessite de former au moins deux contacts électriques distincts. De plus, dans les véhicules de gamme supérieure, les moyens d'éclairage sont généralement divisés en trois, une lampe pour éclairer chacun des passagers avant, et une lampe générale destinée à éclairer l'ensemble de l'habitacle, et ces trois lampes nécessitent chacune un interrupteur pour pouvoir les activer indépendamment les unes des autres.

Ainsi, une pluralité d'interrupteurs est nécessairement montée sur le plafonnier pour commuter les différentes lampes ou le déplacement du toit ouvrant de sorte que le conducteur qui en situation de conduite ne peut porter son regard sur ledit plafonnier, actionne à l'aveugle les différents interrupteurs sans être absolument sûre d'actionner celui qui correspond à la fonctionnalité qu'il recherche.

Un objet de la présente invention est alors de fournir un plafonnier, qui non seulement permet au conducteur de localiser parfaitement dans l'espace les moyens de commande des lampes ou du toit ouvrant, mais aussi qui permet de diminuer la portion d'espace occupée par les différents moyens de commande.

A cet effet, la présente invention propose un plafonnier comportant des premiers moyens de commande d'un toit ouvrant et des seconds moyens de commande d'un éclairage, lesdits premiers moyens de commande comprenant un dispositif d'activation par surface tactile matricielle, ladite surface tactile matricielle présentant une première zone de détection adaptée à recevoir un appui pour commander ledit toit ouvrant, et lesdits seconds moyens de commande, situés éloignés dudit dispositif d'activation, comprenant une seconde zone de détection adaptée à commander ledit éclairage lorsque ladite seconde zone de détection est occupée.

Ainsi, une caractéristique de l'invention réside dans la combinaison de deux modes de commande différents, éloignés l'un de l'autre sur le plafonnier et dont l'activation est susceptible d'être effectuée au moyen des doigts en éprouvant deux sensations tactiles distinctes.

De la sorte, non seulement les moyens de commande sont parfaitement distincts dans l'espace, mais ils sont également distincts par la perception tactile.

En outre, les dispositifs d'activation par surface tactile matricielle sont peu encombrants et ils permettent d'effectuer plusieurs types de commande avec un seul élément, ce qui diminue plus encore, la taille de la portion d'espace occupée par les moyens de commande.

Par ailleurs, comme on l'expliquera plus en détails dans la suite de la description, lesdits seconds moyens de commandes sont constitués de capteurs de taille réduite.

Selon un mode de mise en oeuvre de l'invention particulièrement avantageux, ledit éclairage est constitué par des diodes électroluminescentes plus communément dénommées LEDs. De la sorte, d'une part les moyens d'éclairage sont également peu encombrants et d'autre part, ils consomment moins d'énergie que les lampes traditionnelles.

Préférentiellement, ladite seconde zone de détection comporte aux moins deux portions distinctes espacées l'une de l'autre, une première portion destinée à commander une première lampe apte à éclairer un premier espace et une deuxième portion destinée à commander une deuxième lampe apte à éclairer un deuxième espace, et ledit dispositif d'activation par surface tactile matricielle est situé entre lesdites deux portions.

Ainsi, grâce à cette caractéristique, les deux portions distinctes de la seconde zone, correspondant chacune aux moyens d'éclairage de chaque passager avant, sont aisément dissociées à l'aveugle par le conducteur, puisqu'elles sont, éloignées l'une de l'autre et séparées par le dispositif d'activation par surface tactile matricielle. La perception tactile dudit dispositif est différente de celle desdites secondes zones de détection, de sorte que la distinction à l'aveugle des moyens de commande est beaucoup plus aisée.

Selon un mode de réalisation de l'invention particulièrement avantageux, ladite seconde zone de détection comporte une troisième portion destinée à commander une troisième lampe apte à éclairer un troisième espace susceptible de comprendre lesdits premier et second espace. Ainsi, grâce à cette troisième portion, il est possible de commander l'éclairage dudit troisième espace qui est généralement celui de l'habitacle complet du véhicule.

Avantageusement, ladite première zone de détection dudit dispositif d'activation par surface tactile matricielle comporte deux parties, une première partie susceptible de recevoir un premier appui pour commander l'ouverture dudit toit ouvrant tant que ledit premier appui est maintenu et une seconde partie susceptible de recevoir un second appui pour commander la fermeture dudit toit ouvrant tant que ledit second appui est maintenu.

Ainsi, sur une seule zone de détection du dispositif d'activation, il est possible de commander soit l'ouverture, soit la fermeture du toit par un simple appui sur l'une ou l'autre des parties de ladite première zone de détection.

Selon un autre mode de réalisation de l'invention particulièrement avantageux, ladite première zone de détection comprend des moyens de détection de l'appui glissant de la première partie vers la seconde partie pour commander l'ouverture complète dudit toit ouvrant et l'appui glissant de la seconde partie vers la première partie pour commander la fermeture complète dudit toit ouvrant. De la sorte, grâce à la même zone de détection on peut obtenir une autre commande permettant avec une seule action, un appui glissant, de porter le toit ouvrant soit dans une position complètement ouverte, soit dans une position complètement fermée.

Selon encore un autre mode de réalisation de l'invention, le plafonnier est formé d'un seul élément sur lequel sont montés ledit éclairage et lesdits moyens de commande, ledit élément étant adapté à être raccordé électriquement à un circuit d'alimentation et à des moyens d'entraînement dudit toit ouvrant.

Avantageusement, ledit élément est un ruban souple et mince, plus communément dénommé « flex » sur lequel sont montés l'éclairage et les moyens de commande.

Ainsi, le plafonnier, objet de l'invention, est adapté à être réalisé au préalable en un seul élément, indépendamment du véhicule dans lequel il est susceptible d'être monté puis, d'être intégré directement dans la paroi de plafond spécialement adaptée à cet effet et raccordé électriquement aux circuits de commande et d'alimentation.

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
- la Figure 1 est une vue schématique en perspective d'un mode de réalisation d'un plafonnier, objet de l'invention, en cours d'installation ; et,
- la Figure 2 est un schéma synoptique des différents éléments de l'invention et de leurs liaisons.

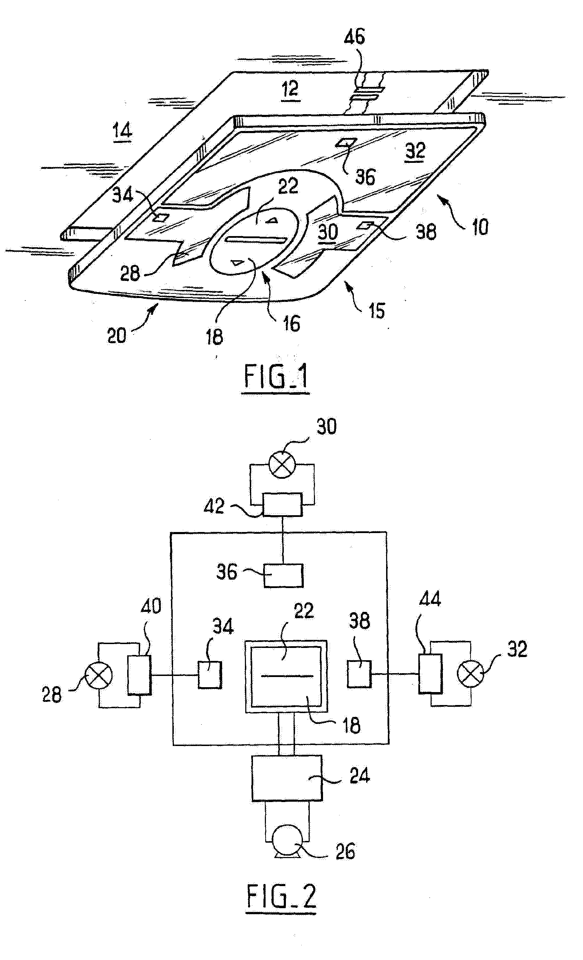

La Figure 1 illustre un plafonnier 10 situé au regard d'un logement 12 ménagé dans une paroi de plafond 14 d'un véhicule automobile et qui est destiné à être encastré dans ledit logement 12. Afin d'être complètement intégré à la paroi de plafond 14, le plafonnier 10 présente une surface principale externe 15 destinée à former une surface continue avec la surface de la paroi de plafond 14 après que le plafonnier 10 a été intégré.

Le plafonnier 10 comprend des premiers moyens de commande 16 constitués d'un dispositif d'activation par surface tactile matricielle. De tels dispositifs connus sous le nom anglais de « touchpad » peuvent être du type décrit dans les documents : FR 2 798 329, FR 2 800 885 ou US 6 157 372 notamment.

Ledit dispositif comporte une zone de détection sensiblement circulaire qui présente une première partie 18 semi-circulaire orientée vers un premier côté 20 du plafonnier destiné à être dirigé vers l'avant du véhicule et une seconde partie 22, opposée à la première portion 18.

On retrouve sur la Figure 2, de façon schématique, le dispositif d'activation par surface tactile matricielle 16 dont la zone de détection présente les deux parties 18, 22. Le dispositif d'activation est relié électriquement à une interface de commande 24 qui est elle-même reliée à un moteur électrique 26.

De la sorte, de manière conventionnelle, lorsque l'on porte appui contre la seconde partie 22 de la zone de détection un premier signal fournit une information à l'interface de commande 24 qui commande l'ouverture du toit ouvrant (non représenté) par l'intermédiaire du moteur électrique 26. A l'inverse, lorsque l'on porte appui contre la première partie 18 de la zone de détection un deuxième signal fournit une information à l'interface de commande 24 qui commande la fermeture du toit ouvrant.

Cependant, selon ce mode de réalisation, dès que l'appui sur les première 18 ou seconde 22 parties, cesse la fermeture ou l'ouverture dudit toit ouvrant est stoppée, de sorte qu'il peut être disposé dans une position intermédiaire entre la position d'ouverture complète ou de fermeture complète.

En revanche, la zone de détection des premiers moyens de commande comprend des moyens de détection d'un premier appui glissant de la première partie 18 vers la seconde partie 22 ; ledit premier appui glissant induit un troisième signal fournissant une information à l'interface de commande 24 qui actionne ledit toit ouvrant jusqu'à l'ouverture complète.

A l'inverse, la zone de détection des premiers moyens de commande comprend des moyens de détection d'un second appui glissant de la seconde partie 22 vers la première partie 18 permettant d'induire un quatrième signal fournissant une information à l'interface de commande 24 qui actionne ledit toit jusqu'à la fermeture complète.

Le plafonnier 10 illustré sur la Figure 1 comprend en outre trois zones d'éclairage, deux premières zones 28, 30 situées de chaque côté des premiers moyens de commande 16 et une troisième zone 32, située à l'arrière desdits premiers moyens de commande 16 vers le côté opposé au premier côté 20. Ces trois zones, 28, 30, 32 contiennent des LEDs dont la force d'éclairage est grande par rapport à la puissance électrique consommée et surtout, ils sont très compacts vis-à-vis des lampes classiques.

Par ailleurs, chacune des trois zones d'éclairage 28, 30, 32 comporte respectivement des zones de détection, 34, 36, 38, dans lesquelles sont disposés des capteurs de proximité susceptibles d'être activés en approchant, par exemple un doigt, au regard dudit capteur ou en établissant un contact avec lui.

Ces capteurs, sont du type à antennes, capacitifs ou optiques.

On retrouve sur la Figure 2, représentées de façon schématique, les zones de détection 34, 46, 38 correspondant respectivement aux zones d'éclairage 28, 30, 32 représentées par un schéma de lampe et constituées, ici de LEDs.

Ainsi, on comprend qu'en portant un doigt ou un organe au regard ou contre l'une des zones de détection 34, 36, 38, on active l'une ou l'autre des interfaces d'allumage correspondante, 40, 42, 44 qui commande respectivement l'allumage des lampes des zones d'éclairages 28, 30 ou 32.

Bien évidemment, les trois zones d'éclairage 28, 30, 32 sont susceptibles d'être commandées indépendamment les unes des autres, en mode éclairage par une première approche de la zone de détection correspondante et en mode éteint par une seconde approche de ladite zone de détection correspondante.

Un avantage bien compris de la présente invention, réside notamment dans la disposition relative dudit dispositif d'activation par surface tactile matricielle 16 et des capteurs de proximité des zones de détection, 34, 36, 38 ; lesdits capteurs sont disposés autour de la surface tactile matricielle et éloignés d'elle de façon qu'il ne puisse y avoir de confusion pour commander, à l'aveugle, l'un ou l'autre des moyens d'éclairage, ou du toit ouvrant.

Par ailleurs, compte tenu du moyen d'actionnement, l'un en appui simple ou glissant pour le toit ouvrant, l'autre par effleurement de l'une ou l'autre des zones de détection situées autour de la surface tactile, pour les moyens d'éclairage, la confusion est rendue encore moins possible.

De plus, selon un mode de mise en oeuvre particulièrement avantageux, des temporisations différentes sont susceptibles d'être programmées pour le temps de réaction des différents capteurs de proximité par rapport au dispositif d'activation par surface tactile matricielle de façon à différencier plus encore les moyens de commande.

Comme l'illustre la Figure 1, le plafonnier 10 est formé d'un seul élément sur lequel sont montées les zones d'éclairages 28, 30 et 32 munies de leurs moyens de commande 34, 36, 38 et disposées autour du dispositif d'activation par surface tactile matricielle 16, ledit élément étant adapté à être raccordé électriquement à un circuit d'alimentation et à des moyens d'entraînement dudit toit ouvrant par des moyens de connexion 46 bien connus constitués d'une fiche mâle et d'une fiche femelle.

## Revendications

1. Plafonnier, notamment pour véhicule automobile, comportant des premiers moyens de commande d'un toit ouvrant et des seconds moyens de commande d'un éclairage, **caractérisé en ce que** lesdits premiers moyens de commande (16) comprennent un dispositif d'activation par surface tactile matricielle, ladite surface tactile matricielle présentant une première zone de détection (18, 22) adaptée à recevoir un appui pour commander ledit toit ouvrant, et **en ce que** lesdits seconds moyens de commande, situés éloignés dudit dispositif d'activation, comprennent une seconde zone de détection (34, 36, 38) adaptée à commander ledit éclairage (28, 30, 32) lorsque ladite seconde zone de détection (34, 36, 38) est occupée.

2. Plafonnier selon la revendication 1, **caractérisé en ce que** ledit éclairage (28, 30, 32) est constitué par des LEDs.

3. Plafonnier selon la revendication 1 ou 2, **caractérisé en ce que** ladite seconde zone de détection (34, 36, 38) comporte aux moins deux portions distinctes (34, 38) espacées l'une de l'autre, une première portion (34) destinée à commander une première lampe (28) apte à éclairer un premier espace et une deuxième portion (38) destinée à commander une deuxième lampe (32) apte à éclairer un deuxième espace, et **en ce que** ledit dispositif d'activation par surface tactile matricielle (16) est situé entre lesdites deux portions (34, 38).

4. Plafonnier selon la revendication 3, **caractérisé en ce que** ladite seconde zone de détection comporte une troisième portion (36) destinée à commander une troisième lampe (30) apte à éclairer un troisième espace susceptible de comprendre lesdits premier et second espace.

5. Plafonnier selon l'une quelconque des revendications 1 à 4, **caractérisé en ce que** ladite première zone de détection dudit dispositif d'activation par surface tactile matricielle (16) comporte deux parties (18, 22), une première partie (22) susceptible de recevoir un premier appui pour commander l'ouverture dudit toit ouvrant tant que ledit premier appui est maintenu et une seconde partie (18) susceptible de recevoir un second appui pour commander la fermeture dudit toit ouvrant tant que ledit second appui est maintenu.

6. Plafonnier selon la revendication 5, **caractérisé en ce que** ladite première zone de détection comprend des moyens de détection de l'appui glissant de la première partie vers la seconde partie pour commander l'ouverture complète dudit toit ouvrant et l'appui glissant de la seconde partie vers la première partie pour commander la fermeture complète dudit toit ouvrant.

7. Plafonnier selon l'une quelconque des revendications 1 à 6, **caractérisé en ce qu'**il est formé d'un seul élément (10) sur lequel sont montés ledit éclairage (28, 30, 32) et lesdits moyens de commande (16, 34, 36, 38), ledit élément étant adapté à être raccordé électriquement à un circuit d'alimentation et à des moyens d'entraînement dudit toit ouvrant.

8. Plafonnier selon l'une quelconque des revendications 1 à 7, **caractérisé en ce que** la seconde zone de détection comprend un capteur de proximité susceptible d'être activé en approchant, par exemple un doigt, au regard dudit capteur ou en établissant un contact avec lui pour fournir un signal de commande d'allumage d'éclairage.

9. Plafonnier selon la revendication 8, **caractérisé en ce que** ledit capteur de la seconde zone de détection est du type à antenne, capacitif ou optique.
